# EUROPEAN PATENT APPLICATION

(11) **EP 3 040 316 A1**
(43) Date of publication of application: **06.07.2016**
(21) Application number: 14200576.8
(22) Date of filing: 30.12.2014
(51) Int. Cl.: C02F 3/30, C02F 3/12, C02F 101/30

(54) **Method and installation for pre-treatment employing a filter cake**

(71) Applicant: Grundfos Holding A/S, 8850 Bjerringbro (DK)
(72) Inventor: Jæger, Tom, 9000 Aalborg (DK); Dominiak, Dominik Marek, 91-718 Lodz (PL); Schou, Christian, 7442 Engesvang (DK); Gausmann, Marcel, 52062 Aachen (DE)
(74) Representative: Plougmann Vingtoft a/s

(57) **Abstract**

The present invention relates to a water treatment methos and installation comprising a pre-filtering device receiving water, such as waste water, to be treated and providing a filtrate, and a biological treatment device being fluidic connectable to or in fluidic connection with the pre-filtering device for receiving the filtrate from the pre-filtering device. The biological treatment device is adapted to perform a biological treatment of the filtrate and to provide sludge solids. The pre-filtering device is a cake filtration device having a filtration cake wherein the filtration cake is being provided by deposition of solids from the sludge formed in the biological treatment device.

## Description

### FIELD OF THE INVENTION

The present invention relates to a water treatment system comprising a pre-filtering device receiving water, such as, wastewater to be treated and providing a filtrate, and a biological treatment device being fluidic connectable to or in fluidic connection with the pre-filtering device for receiving the filtrate from the pre-filtering device. The biological treatment device is adapted to perform a biological treatment of the filtrate and to provide sludge solids. The pre-filtering device is a cake filtration device having a filtration cake wherein the filtration cake is being provided by deposition of solids from the sludge formed in the biological treatment device.

### BACKGROUND OF THE INVENTION

A successful filtration by use of a filtration cake which is made from sludge material being deposited on a filtration cake support is disclosed in WO 2012/136214. The filtration process reported in this document focussed on a high-performance filtration process of activated sludge, which is at the core of biological wastewater treatment plants. The process disclosed is typically a two stage process - separation of activated sludge to provide an activated sludge supernatant, preferably by means of settling already present in wastewater treatment plants, and filtration of the supernatant through a cake made of sludge flocs originating from the material settled in the separation process.

While the process of WO2012/136214 is designed to improve the quality of wastewater treatment plant effluent, wastewater is more and more considered as a rich resource (in terms of energy production) and there is a trend these days to shift from energy consumption to energy production in wastewater treatment. This can be achieved by re-directing organic materials and nutrients from secondary biological treatment to anaerobic digesters. However, although it could be seen as attractive to digest the biological material from the aerobic processing tank in a digester (in which the biological material is converted into biogas), it is found that the dry matter content of the material in the aerobic processing tank is low thereby requiring some dewatering prior to digestion which results in that although being attractive, the technical problems related to dewatering renders the use of biological material for producing e.g. biogas less attractive. The filtration cake reported in WO2012/136214 may be mixed in to the part which is digested and if this is performed, the dry matter content will be increased.

Today, two approaches are used for increasing the biogas yield of the wastewater treatment plant:
- Improved primary settling: primary settling of raw wastewater is an old, yet effective technique. These days people strive to improve its efficiency by introducing high-rate lamella clarifiers, coagulation etc. Primary settling removes approx. 50% of suspended solids (heaviest material) and 20-30% of BOD (Biological Oxygen Demand - a measure of organic loading).
- Fine screening: Pre-filtration of raw wastewater with fine screens removes loading of the rest of the water treatment system to a similar extent as primary settling (>50% TSS, >20% BOD) but with a much lower footprint, reportedly as little as 10% of primary settling. This saves land and enables capacity expansion of the plant.

While the fine screening appears to be the more attractive of the two, problems due to fouling of the filters used in the fine screening are well known but not yet completely solved, leading to difficulties in implementing such a fine screening.

Hence, improved fine screening would be advantageous, and in particular a more efficient and/or reliable increase of the dry matter in material to be digested would be advantageous.

### OBJECT OF THE INVENTION

An object of the present invention is to provide an alternative to the prior art.

A further object of the invention may be seen as to improve the energy balance in treating, water, such as wastewater.

Yet a further object of the invention may be seen as to increase the treatment capacity of a plant treating, water, such as wastewater.

In particular, it may be seen as a further object of the present invention to provide a pre-filtering that solves the above mentioned problems of the prior art.

### SUMMARY OF THE INVENTION

Thus, the above described object and several other objects are intended to be obtained in a first aspect of the invention by providing a water treatment system comprising
- a pre-filtering device receiving water to be treated and providing a filtrate,
- a biological treatment device being fluidic connectable to or in fluidic connection with the pre-filtering device for receiving the filtrate from the pre-filtering device, the biological treatment device is adapted to perform a biological treatment of the filtrate.

The pre-filtering device is a cake filtration device comprising a filtration cake, where the filtration cake being provided by deposition of solids from the sludge formed in the biological treatment device, so that the filtrate is provided by filtering water through the filtration cake.

As presented herein, the pre-filtering device is arranged upstream of the biological treatment device . In addition, the filtrate produced is typically the stream which is fed to the biological treatment device.

The sludge solids (solids from sludge) for e.g. the filtration cake is typically provided by the biological treatment device; in embodiments including a digester a fraction of the sludge solids may come from the digester.

In the present context a number of terms are used as would be readily understood by a skilled person. Some of these terms are detailed in the following.

*Sludge solids (solids from sludge)* is preferably used to means activated sludge flocs and/or coagulated substances, typically, formed in a biological treatment device.

*Cake filtration* is used to indicate a process in which a liquid is filtrated by flowing through a filtration cake as disclosed herein.

*Cake filtration device* is typically used to indicate a device being configured to provide a filtration by use of a filtration cake.

*A Pre-filtering device* is use to indicate a device comprising a filtration cake as disclosed herein and through which filtration cake a liquid is filtered. "Pre-" typically refers to the upstream position of the pre-filtering device.

*Filtration cake* is used to indicate a porous layer of solid material deposited on a support structure, which solid material is in particulate form and origins typically as a product of biological treatment of wastewater. As presented herein, the solids are preferably activated sludge flocs and/or coagulated substances.

*Anaerobic digestion* (or in short "digestion") is used to indicate a process in which biological material is converted into e.g. biogas.

*Fluidic connectable* is used to indicate a closeable fluidic connection, typically a tube.

*Fluidic connected* is used to indicate a fluid connection, typically a tube. Elements may be fluid connected through a fluid connectable connection.

*Treating (waste) water* is used to indicate a process in which (waste) water is subjected to a biological treatment, such as an aerobic treatment.

*Water* as used herein, e.g. in water treatment system, typically refers to water to be subjected to biological treatment, and includes wastewater in general.

*Wastewater* is used to indicate water containing organic materials and nutrients rendering it unfit for use, consumption or discharge, and therefore requiring treatment.

*Downstream* means placed after a unit or a process. *Upstream* means placed before a unit or process.

*Biological treatment* is typically used to indicate a biological treatment of water by use of bacteria, i.e. living organisms which metabolises organic matter in the water preferably as opposed to the use of chemicals). Biological treatment is typically about bacteria (sludge) consuming the impurities in water (organics and nutrients) and, with help of oxygen added through aeration, converting them to more bacteria (biomass) and CO2 and N2 (aerobic treatment).

*Wastewater to be treated* preferably refers to waste water to be subjected to biological treatment, typically in a biological treatment device.

*Gas* as used in *slug of gas* preferably refers to air, such as atmospheric air (which may be pressurised and/or cleaned from impurities).

The present invention aims at using "cake filtration" upstream of e.g. biological treatment facility. By upstream is meant that the waste material is filtered by use of cake filtration prior to being biologically treated in the biological treatment facility. It has been found in connection with the present invention that by use of such an upstream cake filtration, the filtrate has an improved quality in the sense that it has a lower loading of organics and nutrient than wastewater coming in to the plant. As less organic and nutrient thereby need to be treated in a downstream biological treatment facility, the energy demand for the downstream treatment facility may be lowered through lower aeration demand, and/or the downstream treatment facility's treatment capacity increased through more capacity to aerate.

Further, as the filtration cake is made from biological material and has taken up organics and nutrients from the wastewater in the pre-filtration, the filtration cake has a relatively high dry matter content (3-6% dry matter) and the filtration cake may be seen as a "rich fuel" for e.g. a digestion process for producing biogas. Thus, the filtration cake may upon renewal be disposed into e.g. the digester, which results in an overall increase in the biogas (and hence energy) production of the plant. As seen for the digester, the filtration cake can be viewed as being pre-loaded with organics and organics prior to being digested - compared to traditional wastewater treatment facilities, the material to be digested needs to be heavily thickened and the present invention may be seen as at least mitigating the thickening as the upstream cake filtration provides a material with a high dry matter content.

Thus, the present invention provides a number of advantages. For instance, when the water into the biological treatment has a lower loading of organics and nutrient, the treatment capacity (e.g. in tons per hour) of a plant may be increased compared to a scenario when no upstream cake filtration is applied. This may be exploited either by retro-fitting an upstream cake filtration in an existing treatment facility to increase the capacity of the facility without the need for changing the facility as such, or be exploited in a design phase to provide a more efficient treatment facility with less foot print, energy foot print etc.

Accordingly, cake filtration as a pre-treatment of incoming wastewater can shift the energy balance of the plant from energy consumption towards energy production, which is a popular trend these days. The present invention has the advantage, that the filtration cake is made from activated sludge present in the treatment plant and use it for filtration of raw wastewater coming into the treatment plant. Thereby, the stream used for building the filtration cake origins typically from the treatment plant itself after the wastewater has been exposed to a biological treatment process whereas the stream being pre-filtered origins typically from wastewater not yet exposed to a biological treatment.

Preferably, the filtration cake is provided on a fluid penetrable support structure of the pre-filtering device, and the filtration cake is preferably provided on an upstream surface of the pre-filtering device relatively to the flux direction of water through the filtration cake (upstream typically refers to the flow direction of the flux of water through the surface).

The pre-filtering device may preferably be fluidic connectable to receive biological activated sludge, preferably activated sludge flocs, so as to deposit material of the biologically treated water on the upstream surface of the pre-filtering device. This is to provide a filtration cake made from sludge solids formed in the biological treatment device and the filtration cake is used for filtering non-biologically treated water in the pre-filtering device.

A water treatment system according to present invention may advantageously comprise a digester for converting organic material of the water into biogas. Such as digester may preferably be fluidic connectable with or in fluidic connection with the pre-filtering device for the receiving filtration cake containing material filtered out from the water. In addition, the digester may preferably comprise a confined space having an outlet for gas produced, an outlet for waste sludge and an outlet for rejected water. The outlet for rejected water from the digester is preferably fluidic connectable to or in fluidic connection with the biological treatment device for feeding rejected water from the digester (8) to the biological treatment device (2).

The deposited solids are preferably sludge solids, preferably being activated sludge flocs.

Preferably, the filtration cake has been or is compressed in a filtration cake design phase (A, B) prior to filtration of the water.

A water treatment system according to the present invention may preferably also comprising a fluid dividing device dividing the water to be treated into at least two streams of water, one stream going into the pre-filtering device and one stream going into the biological treatment device.

Such a fluid dividing device may preferably be adapted to divide the water into two streams at a volume ratio of one of the following: 10% to pre-filtering device (1) and 90 % to the biological treatment device (2), or 20% to pre-filtering device (1) and 80 % to biological treatment device (2), or preferably 30 % to the pre-filtering device (1) and 70 % to biological treatment device (2), or preferably, the water is divided so that the volume fraction flowing to the pre-filtering device (1) is typically 5 to 40%.

Preferably, the support structure is provided as one or more tubular element having a fluid penetrable surface. The interior of such one or more of the tubular elements preferably forms the upstream surface of the pre-filtering device on which the filtration cake is provided, and the interior of the one or more of the tubular elements is preferably fluidic connectable to or in fluid connection with an inlet receiving water to be treated.

Preferably, each of the tubular elements comprising an inner layer and an outer layer being concentrically arranged, wherein each layer comprises through going openings, and the through going openings in the inner layer have a larger cross sectional area than the through going openings in the outer layer.

The dry matter content of the filtration cake may preferably be between 0.02 - 0.5 kg/m² (relatively to the area of the inner surface - or in general relatively to the area of the upstream surface). The thickness of the filtration cake on tubular elements is preferably less than 3 mm, such as less than 2 mm.

The tubular element(s) may preferably be cylindrical element(s) having an internal diameter less than 15 mm, such as less than 12 mm and even less than 10 mm. A plurality of tubular elements which are arranged in parallel having a common inlet for receiving water to be treated may applied in a water treatment system according to the invention.

Preferably, the pressure difference across the pre-filtering device is between 20 and 200 mbar.

The fluidic connectable connections is preferably established by comprising valves for controlling the flow through such connections.

A water treatment system according to the present invention may preferably further comprise a separator being fluidic connectable to or fluidic connected to the biological treatment device so as to receive sludge, preferably being sludge mixed liquor, from the biological treatment device and separating the sludge into at least two fractions, an effluent and a discharge wherein the effluent has a lower content of solids than the discharge.

Preferably, the separator may be a sedimentation device in which the discharge is sludge with solids, preferably being activated sludge, and the effluent is activated sludge supernatant, and where the separator being fluidic connectable to or in fluidic connection with the biological treatment device for feeding the discharge to the biological treatment device.

The pre-filtering device may preferably be fluidic connectable to or in fluidic connection with the separator so as to feed the discharge towards the upstream surface of the pre-filtering device.

A water treatment system according to present invention may preferably further comprise a further filter element arranged to filter effluent from the separator, the filter element having a filtration cake provided on a fluid penetrable support surface of the filter element, the filtration cake being provided on an upstream surface of the filter element relatively to the flux direction of effluent through the filtration cake, the filtration cake being provided by deposition of solids from the sludge formed in the biological treatment device.

A water treatment system according to the present invention may preferably further comprise a screening device arranged upstream of the pre-filtering device, said screening device being adapted to carry out a filtering-out of objects above a pre-selected size, such as above 2 mm, preferably above 5 mm, such as above 10mm, from the water prior to be fed into the pre-filtering device.

In a second aspect the invention relates to a method of treating water, such as waste water, which method utilizes a filtration system according to the first aspect of the invention and comprising the steps of:
- providing a filtration cake, preferably by the method according to the third aspect of the invention,
- filtering the water through the filtration cake,
- subjecting the filtered water to biological treatment in the biological treatment device,
- removing the filtration cake.

The method preferably also includes the step of feeding the removed filtration cake to a digester.

Preferably, the step of separating from the content in the digester may comprise separating:
- reject water and feeding it to the biological treatment device,
- waste sludge,
- biogas.

Preferably, the method may further comprise separating the sludge formed in the biological treatment device, by use of the separator, into at least two fractions, an effluent and a discharge, wherein the effluent has a lower content of solids than the discharge and feeding the discharge of the separator into the biological treatment device during filtration or into the pre-filtering device for providing of a filtration cake.

Preferably, the method may further comprise dividing the water into two streams and feeding one stream to the pre-filtering device and feeding the other stream into the biological treatment device. Preferably, the water may be divided into two streams at a volume ratio of one of the following 10% to the pre-filtering device (1) and 90 % biological treatment device (2), or 20% to the pre-filtering device (1) and 80 % to the biological treatment device (2), or 30 % to the pre-filtering device (1) and 70 % to the biological treatment device (2).

In a third aspect the invention relates to a method for providing a filtration cake of a pre-filtering device, preferably being a filtration cake used in the system according to the first aspect of the invention, and for filtering water through the filtration cake, wherein the filtration cake is provided by:
- feeding sludge formed in a biological treatment device towards a surface of a support structure,
- an accumulation phase comprising accumulating activated sludge flocs and/or coagulated substances on the support structure by inducing a pressure difference to generate a flow of sludge, towards and through the support structure until a layer of flocs has been established on the support structure,
- a compression phase comprising increasing the pressure difference to a level being sufficient to compress the layer of accumulated flocs on the support structure into a filtration cake,
wherein
- the filtration cake being provided from activated sludge flocs and/or coagulated substances formed in the a downstream biological treatment device which receives pre-filtered water from the pre-filtering device.

Preferably, the pressure difference during the accumulation phase (A) may be below 1 bar, such as below 0.5 bar, or even lower than 0.1 bar, and the pressure difference during the compression phase (B) may be above the pressure difference of the accumulation phase (A) and below 1 bar, such as below 0.5 bar, or even below 0.3 bar.

The pressure difference during the accumulation phase (A) may preferably increase over time.

Preferably, the pressure difference during the accumulation phase (A) and/or the compression phase (B) is/are provided by a hydrostatic pressure difference, e.g. provided by arranging an outlet of the pre-filtering device at lower level than an upper surface of the sludge, by pressurising the sludge, and/or providing a suction at the outlet.

The pre-filtering device after having been in an operation mode (C) for a period, may preferably be is renewed by removing the filtration cake, and the accumulation phase (A) and compression phase (B) may preferably be carried out again.

Some preferred embodiments of the invention includes a digester and in such embodiments it may be preferred that the filtration cake is built as it is disclosed herein from solids formed in the biological treatment device (activated sludge) only; however it is considered within the scope of the present invention that a fraction of the solids for the filtration cake comes from the digester. This often means that activated sludge from the biological treatment device is blended with digester sludge (sludge present in the digester) and the filtration cake is built from that blend. Often, the ratio between solids taken from the digester and the activated sludge is low, such as less than 30 wt % or even such as 1-5 wt %. The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The present invention will now be described in more detail with regard to the accompanying figures. The figures show one way of implementing the present invention and is not to be construed as being limiting to other possible embodiments falling within the scope of the attached claim set.

Figure 1 is a schematical illustration of a water treatment system according to a first embodiment of the invention,

Figure 2 is an schematical illustration of a water treatment system according to a further preferred embodiment of the invention,

Figure 3 is a schematical illustration of the use of water treatment system according to a preferred embodiment of the invention; in fig. 3 the following use scenarios are illustrated: top part - filtration; middle part - filtration cake removal; bottom part - filtration cake formation.

Figure 4 is a chart indicating an imposed pressure difference profile accross the filtration cake and the support structure during a filtration cake design phase (A, B) and filtration phases (C) of the system which filtration cake design phase (A, B) typically takes place in the beginning of each filtration cycle and which phases typically constitutes a filtration cycle,

Figure 5 is a schematical illustration of a further embodiment of a water treatment system according to the present invention,

Figure 6 is a schematical illustration of a support structure on which a filtration cake is to be formed according to a preferred embodiment of the invention; upper part of fig. 6 shows the support structure in an end-view and lower part fig. 6 shows the support structure in a cross sectional view along line A-A shown in the upper part of fig. 6,

Figure 7 is a schematical illustration of filtration and the steps involved in filtration, removal of a filtration cake from the support structure as illustrated in fig. 6 and the cleaning of that support structure, and

Figure 8 is a schematical cross sectional view of a pre-filtering device according to a preferred embodiment of the present invention having a support structure as disclosed in fig. 6.

### DETAILED DESCRIPTION OF PREFERRED EMBODIMENTS

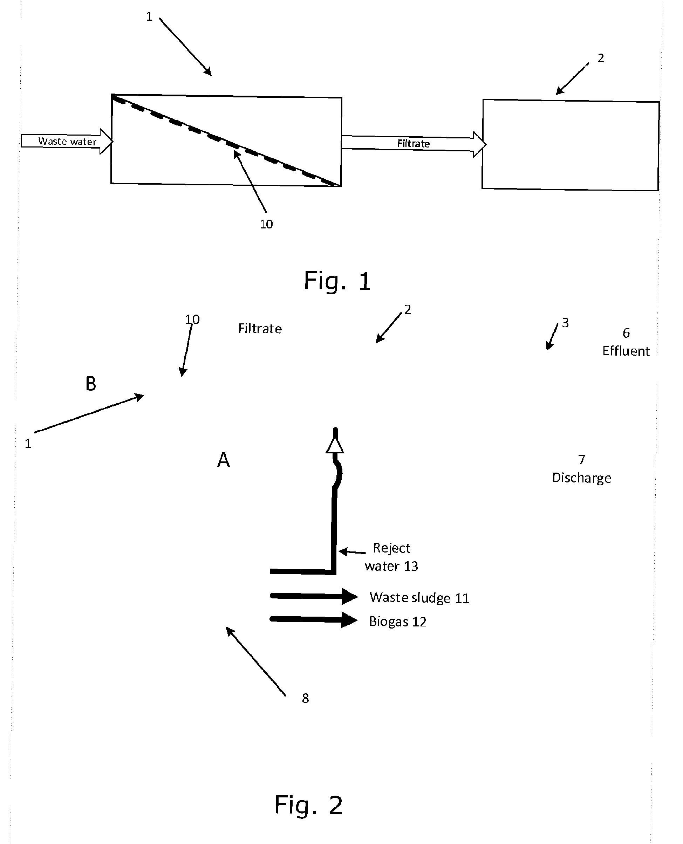

Reference is made to fig. 1 which is a schematical illustration of a water treatment system according to a first embodiment of the invention. The water treatment system comprises a pre-filtering device 1 receiving wastewater to be treated and providing a filtrate and a biological treatment device 2. As illustrated the biological treatment device is in fluidic connection with the pre-filtering device 1 for receiving the filtrate from the pre-filtering device 1. As disclosed herein the connection between the filtering device 1 and the biological treatment device 2 may be fluidic connectable, which means that the fluid connection may be shut-off.

The biological treatment device is adapted to perform a biological treatment of the filtrate and to provide sludge solids for the pre-filtering device 1.

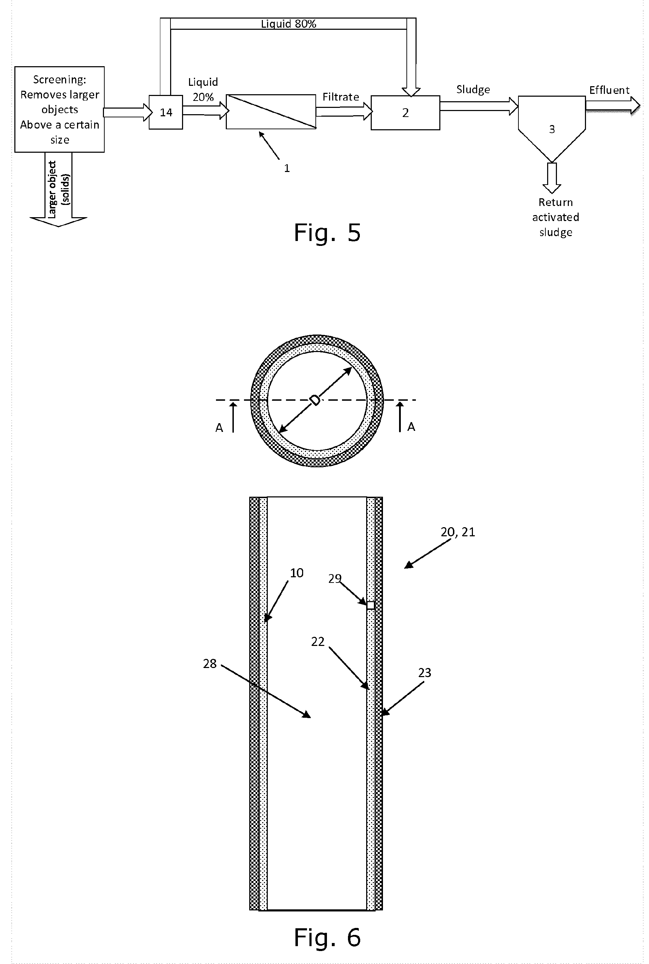

As shown in fig. 1, the pre-filtering device 1 is a cake filtration device having a filtration cake 10 provided on a fluid penetrable support structure 20 (an example of the support structure is shown in fig. 6 and is disclosed in further details below). The pre-filtering device 1 typically also comprises an inlet and an outlet (not shown) for inletting wastewater to be filtered and for outletting a filtrate and removed cake material as will be disclosed in further details below. The filtration cake 10 being provided on an internal and upstream surface of the pre-filtering device 1 relatively to the flux direction of wastewater through the filtration cake to provide the filtrate. The filtration cake is provided by deposition of solids from the sludge formed in the biological treatment device 2, which means that the filtrate is provided by filtering wastewater through filtration cake 10. Thus, while the sludge in the biological treatment device 2 is used to form the filtration cake, the liquid to be filtered by the pre-filtering device 1 is wastewater not yet being exposed to biological treatment in the biological treatment device 2.

Referring to fig. 2, a water treatment system according to preferred embodiments of the present invention may be seen as taking in activated sludge from a return sludge loop of a conventional activated sludge wastewater treatment system and building a filtration cake 10 with it (stream A in fig. 2). Then, the water treatment system filters wastewater coming into the plant through the cake (stream B in fig. 2). The thereby pre-filtered wastewater (filtrate) goes to the biological treatment device 2 as it would normally do, but now the pre-filtered wastewater has a much lower loading of matter to be filtered since organics and nutrients are filtered away by the filtration cake and deposited in the filtration cake. This means that the biological treatment device 2 can be smaller, aeration requirement is smaller, and alkalinity dosing requirement is smaller. The spent cake (i.e. used), loaded with organics and nutrients from wastewater, may advantageously be directed into a digester 8 (see fig. 2).

It may be important to realize that surplus activated sludge (extra sludge produced by the biological treatment device 2) would go to a digester anyway. In conventional treatment facilities, it would however need to be thickened to 3-5% dry matter (it normally is approx. 0.5-1% dry matter) by special thickening equipment (usually centrifuges or belt presses helped by coagulation). With the preferred embodiments of the present invention the cake filtration thickens 'for free' and without coagulants, and the cake is a compact structure of high dry matter content and may be disposed in a way that is maintains 3-6% dry matter content.

In embodiments where the filtration cake ends up in the digester 8, its biogas potential is higher than that of ordinary sludge, because the spent filtration cake is loaded with organics and nutrients. More biogas can create more energy. Thus, little energy is used to pre-filter wastewater, and also lower energy is used to treat the pre-filtered wastewater biologically. This, combined with more energy production from biogas means that the energy balance shifts from consumption side to production side. This is the goal of using this invention.

In order to provide material from which the filtration cake 10 is formed, the pre-filtering device 1 is fluidic connectable to receive biological activated sludge, preferably activated sludge flocs, so as to deposit material of the biologically treated wastewater on the upstream surface of the pre-filtering device 1, to provide a filtration cake made from sludge solids formed in the biological treatment 2 device and which filtration cake is used for filtering non-biological treated wastewater in the pre-filtering device (by non-biological treated wastewater is preferably meant wastewater which has not been subjected to the biological treatment in the biological treatment device 2. As shown in fig. 2, the biological treatment device 2 is preferably an aerobic process tank.

The biological treatment device 2 typically provides sludge mixed liquor. A water treatment system may to this end (and other purposes as well) further comprise a separator 3 being fluidic connectable to or fluidic connected to the biological treatment device 2 so as to receive sludge from the biological treatment device 2. Again, fluidic connectable refers to situations where the connection is closeable. The sludge may preferably be sludge mixed liquor flowing out from the biological treatment device 2 and the separator 3 separates the sludge into at least two fractions, an effluent 6 and a discharge (thickened solids) 7. The separator 3 is adapted to provide the effluent 6 with a lower content of solids than the discharge 7.

The separator 3 is advantageously formed as a sedimentation device 3 in which the discharge 7 (when inflow is sludge mixed liquor) is sludge with solids, preferably being activated sludge, and the effluent 6 is activated sludge supernatant (otherwise known as secondary effluent). The separator 3 is as indicated in fig. 2 fluidic connectable to or in fluidic connection with the biological treatment device 2 for feeding the discharge to the biological treatment device 2.

In embodiments including a separator 3, it is preferred that the pre-filtering device 1 is fluidic connectable to or in fluidic connection with the separator 3 so to render it possible to feed the discharge 7 from the separator 3 towards the upstream surface of the pre-filtering device 1. Thereby the filtration cake can be formed by deposition of material formed in the biological treatment device 2 and separated off in the separator 3 to form the discharge.

While the filtration cake has shown to provide an excellent filtration upstream of the biological treatment device 2, it has been found that e.g. the effluent 6 may need a further filtering before leaving the water treatment system. In such situations, a water treatment system may comprise a further filter element (not shown) arranged to filter effluent from the separator 3 and the filter element may be of the same kind as the pre-filtering device 1 arranged upstream of the biological treatment device 2, that is having a filtration cake provided on a fluid penetrable support surface of the filter element. Also for this filter element, the filtration cake is provided on an upstream surface of the filter element relatively to the flux direction of effluent through the filtration cake and the filtration cake being provided by deposition of solids from the sludge formed in the treatment device 2.

As shown in fig. 2, a water treatment system may comprise a digester 8 for converting organic material of the wastewater into biogas. The digester 8 is typically of a kind which converts biological material into biogas, resulting in three streams out from the digester: biogas 12, waste sludge 11 and reject water 13. Reject water is preferably fed into the biological treatment device 2 while the waste sludge 11 is disposed of. Biogas 12 is collected and used as a fuel.

As indicated above, the relatively high dry matter content of the filtration cake 10 makes it highly suitable for the conversion process in the digester 8, and the digester 8 is therefore fluidic connectable with or in fluidic connection with the pre-filtering device 1 for receiving filtration cake 10 containing material filtered out from the wastewater (the filtration cake 10 also contains the material from which is was formed prior to filtration).

The digester may be devised as a confined space having an outlet for gas (biogas 12) produced, an outlet for waste sludge 11 and an outlet for reject water 13.

As the reject water from the digester 8 may be useful for the processes in the biological treatment device 2, the outlet for rejected water 13 from the digester is fluidic connectable to or in fluidic connection with the biological treatment device 2 for feeding reject water from the digester 8 to the biological treatment device 2.

In the water treatment system disclosed herein, the deposited solids forming the filtration cake are preferably sludge solids, preferably being activated sludge flocs.

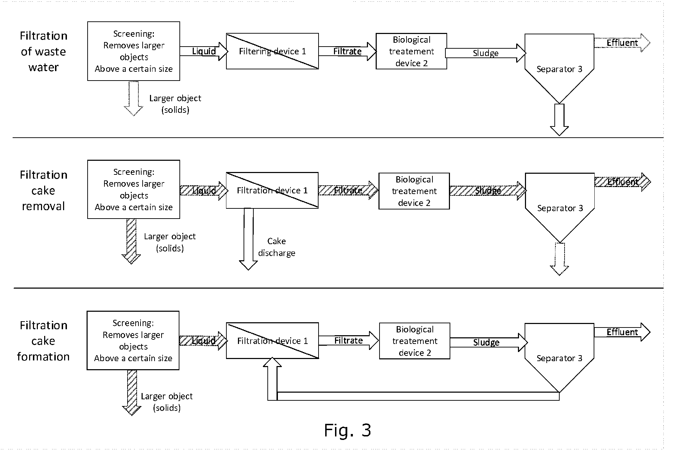

Reference is made to fig. 3 which indicate three different uses of the water treatment system of fig. 2 (please note that the digester 8 has been left out from the figures and that a screening device is arranged as an upstream device filtering larger particulates from incoming wastewater). In fig. 3 the following use scenarios are illustrated: top part - filtration of wastewater; middle part - filtration cake removal; bottom part - filtration cake formation.

As also seen in fig. 3 is that some of the fluidic connections are shut-off which is shown by hatched and white arrows with dotted outer contours. In the top part of fig. 3, the wastewater is screened and flows into the pre-filtering device 1 containing the filtration cake 10. After filtration the filtrate flows into the biological treatment device 2 and leaves the biological treatment device 2 as treated material. The treated material is separated in two fractions (as outlined above) to provide a discharge and an effluent.

In the middle part of fig. 3, the filtration cake 10 is removed, and no fluid is filtered. The removed filtration cake is discharged into the digester 8 (which does not exclude the possibility that mixed liquor from biological treatment device 2 flows to separator 3).

In the bottom part of fig. 3, the filtration cake 10 is being built which includes feeding the discharge from the separator to the upstream surface of the pre-filtering device 1; this will be disclosed in further details below.

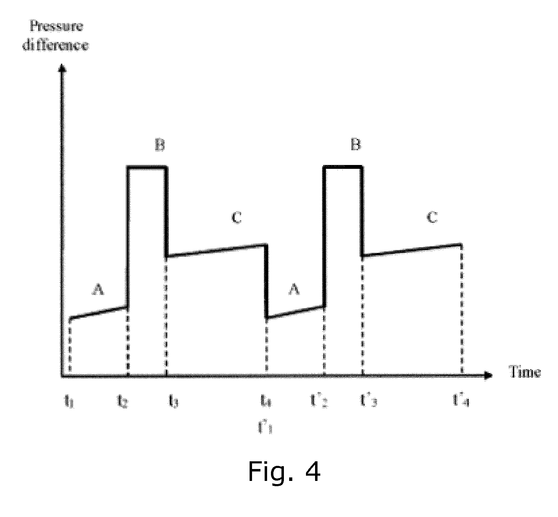

Reference is made to fig. 4 which indicates different steps involved in a preferred embodiment of forming the filtration cake 10, which includes the step compressing the filtration cake 10 in a filtration cake design phase (A, B) prior to filtration of the wastewater. It is noted that the specific pressure profiles used in preferred embodiments may be different from what is disclosed on fig. 4a.

The filtration cake 10 can be understood as being provided during a filtration cake design phase. Upon initiation of the provision of a filtration cake 10, the filtration cake design phase comprising, with reference to fig. 4, an accumulation phase A from time t₁ to t₂ and a compression phase B from time t₂ to t₃. During phase A, the pressure difference is relatively low, that is typically in the order of 0.01 to 0.1 bar and activated sludge flows towards the support structure 20. At the very beginning of the filtration cake 10 design phase, activated sludge flocs and other particles having a size being too large to go through the openings in the support structure 20 are arrested by the support structure 20.

During the accumulation phase A at least, activated sludge flocs having a size allowing them to pass through the mesh or the not yet fully formed filtration cake 10 go through the pre-filtering device 1 and in order to avoid discharging these flocs to the environment, the fluid going through the pre-filtering device 1 is typically recycled to the biological treatment device 2.

Once flocs have begun to be arrested on the support structure 20 and activated sludge flows towards the support structure 20, a further accumulation of flocs on the support structure occurs. This further accumulation is continued until a predetermined thickness of accumulated activated sludge flocs has been reached (t=t₂). The point in time at which this occurs may be determined in a number of ways. One possible way is to monitor the pressure drop over the pre-filtering device 1 and experimentally determine a correlation between the filtration cake of accumulated activated sludge flocs and the pressure drop, so that phase A is ended once a certain pressure drop occurs over the pre-filtering device 1. In fig. 4, this is indicated by the pressure curve in phase A being sloped.

At the end of phase A (t=t₂), the filtration cake 10 has been formed, but is still mechanically quite unstable and the filtering characteristics of the filtration cake 10 may still not be as desired. During compression phase B (from t₂ to t₃), the stream supplied to the filtration device is switched from sludge to feed (wastewater) and defined pressure difference over the pre-filtering device 1 is provided by the feed stream (wastewater) and kept at an elevated level providing a compression of the filtration cake 10. The pressure difference needed for this compression may vary, but may typically be in the range of 0.01 to 1 bar measured across the support and the filtration cake 10. The compression is carried out for a certain time, preferably being determined experimentally, with the aim of compressing flocs in the entire filtration cake 10. At the end of phase B (t=t₃), the filtration cake 10 comprising accumulated and compressed activated sludge flocs and the pre-filtering device 1 is ready for filtration and filtration phase C (t>t₃) is initiated. Once phase B is ended, the pressure difference is lowered to a pressure difference typically being smaller than 1 bar, recirculation of filtrate, if implemented, is stopped, and the filtration as disclosed above is carried out, provided that the filtrate quality is sufficient.

It should be noted, that design of the filtration cake 10 can be performed with other pressure profiles than what is disclosed in fig. 4. For instance the step wise increase and decrease of pressure difference disclosed in fig. 4 may be replaced by smooth pressure transitions and a repetition of phase A and B may also be applied even with different levels of pressure differences in the consecutive phases A and B. When such measures are applied, a further control of the filter characteristics may be applied. For instance, by having a very short consecutive phase B with a relatively high pressure difference, the innermost part of the filtration cake 10 would get relatively more compressed than if the pressure difference was lower.

Replacement - or in general renewal - of the filter or filter cake 10 is performed at t=t₄ from which a new design phase is initiated after removal of the filtration cake 10. Thus, at t=t₄ the cycle comprising phases A, B and C is repeated as indicated in the figure. Phase A and B are in the time range of seconds, preferably phase A being around 20-60 seconds and phase B being around 15-60 seconds, whereas phase C is in the range of minutes to hours.

It is noted that fig. 4 does not disclose the time needed for and the pressure during replacement (renewal) of the filter or filter cake 10. In practical implementations t₁' is not coinciding with t₄ as indicated in fig. 4 as t₁' is a point in time occurring after t₄. However for the sake of clarity, the pressure difference over the pre-filtering device 1 is not disclosed.

In further embodiments of the invention, the system further comprises a fluid dividing device 14 dividing the wastewater to be treated into at least two streams of wastewater, one stream goes into the pre-filtering device 1 and one stream goes into the biological treatment device 2. This is indicated in fig. 5 and the setup has inter alia the advantage that as the pre-filtering device lowers the content of organics and nutrients in the filtered wastewater, the overall load on the biological treatment device 2 is lowered. This can be used either to make the biological treatment device 2 smaller, or the overall capacity (e.g. in tons of wastewater treated per hour) increased. The limit of which fraction of wastewater flow can be pre-filtered is set by the availability of surplus solids in the biological treatment device 2 - the more wastewater is pre-filtered, the less organic and nutrients to grow biological sludge solids and hence the less cake available for wastewater pre-filtration. The ratio "liquid 80%" and "liquid 20%" indicated in fig. 5 is a preferred range per volume and the invention is not limited to this ratio.

Typically, the fluid dividing device 14 is adapted to divide the wastewater into two streams at a volume ratio of 10% to pre-filtering device 1 and 90 % biological treatment device 2, or as the following: 20% to pre-filtering device 1 and 80 % to biological treatment device 2, or preferably 30 % to pre-filtering device 1 and 70 % to biological treatment device 2. In other embodiments, the wastewater is divided so that the volume fraction flowing to the pre-filtering device 1 typically 5 to 40%. Preferably, the ratio is defined by the organic content of the wastewater and therefore process mass balances. The fluid dividing device 14 made formed by system of valves controlling the amount of liquid flowing through different tube branches.

Reference is made to fig. 6 which illustrates a preferred embodiment of a support structure 20 provided as one or more tubular elements 21 having a fluid penetrable surface (in fig. 6 only a single support structure 20 is shown).

During use, the interior of the one or more of the tubular elements 21 forms the upstream surface (inside surface) of the pre-filtering device 1 on which the filtration cake 10 is provided, and the interior of the one or more of the tubular elements 21 is fluidic connectable to or in fluid connection with an inlet receiving wastewater to be treated. By upstream is meant that the flux direction through the wall of the tubular element 21 goes from inside to outside.

Each of the tubular elements 21 shown in fig. 6 comprises an inner layer 22 and an outer layer 23 being concentrically arranged, wherein each layer comprising through going openings, and the through going openings in the inner layer has a larger cross sectional area than the through going openings in the outer layer. Further, as the layers has a thickness, the openings in e.g. the inner layer 22 forms pockets 29 in which material forming the filtration cake may be deposited (in fig. 6 a single pocket 29 is schematically disclosed as a square). The openings provided in the outer layer 23 are selected sufficiently small to arrest the material from which the filtration cake 10 is formed in the pockets 29 of the inner layer 22.

The pockets may typically have dimensions within the following ranges: cross sections from 2x2 to 10x10 mm. Pockets formed as bands, could be larger, such as a width of 50 mm, preferably between 5-100 mm, such as between 10-50 mm. Depth of the pockets could preferably be between 1 and 10 mm, preferably between 2 and 5.

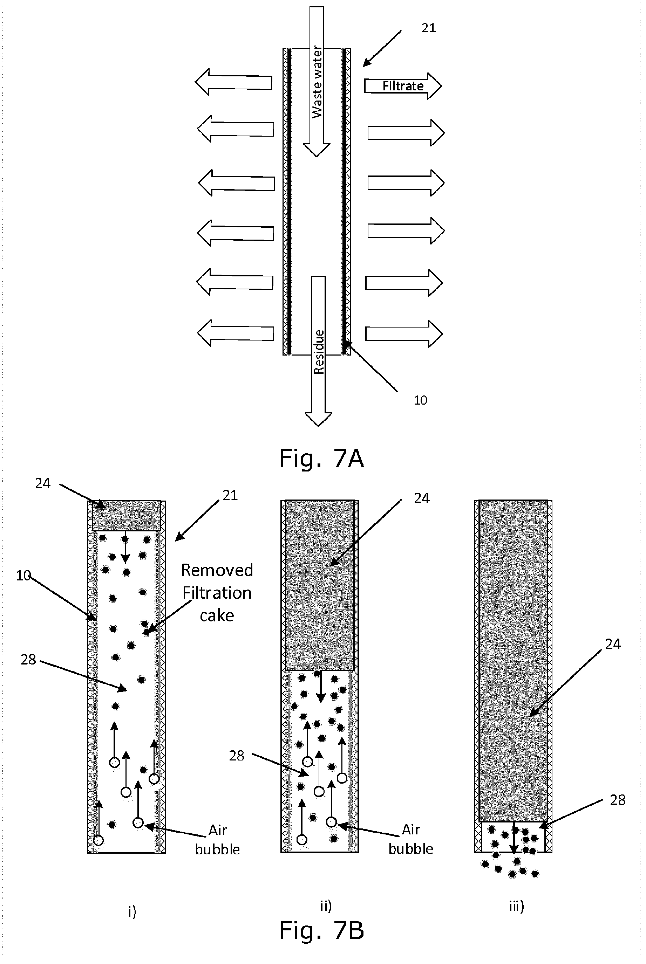

During use of the tubular elements 21, it is preferred to provide a filtration cake 10 having a pre-defined dry matter content per m², such as a dry matter content of 0.01 - 0.5 kg/m2. This, typically, results in a filtration cake 10 with thickness less than 3 mm, such as less than 2 mm. This will - as indicated in fig. 7A - provide a filtration cake 10 which gets mechanical support from the pockets 29 of the inner layer 22. Moreover, the physical thickness of the cake layer and the desired dry matter content of the slurry upon cake removal affect the mechanical dimensions of the tubular elements 21. A single pocket 29 is schematically shown in fig. 6. A larger number of pockets 29 are situated side-by-side in the inner layer 22. The pockets 29 can be circular shaped, square shaped, or rectangular shaped, or even polygon shaped (in cross section)..

Although a tubular element 21 may be provided with any desired cross section, it is preferred that such a tubular element 21 is a cylindrical element having an internal diameter, D in fig. 6, less than 15 mm, such as less than 12 mm and even less than 10 mm. The internal diameter is typically defined by the required and thereby pre-defined dry matter content of the discharged solids and in relation to the demanded cake amount, defined in terms of kg of dry matter per m2. Preferably, a tubular element 21 has an internal diameter related to the desired dry matter amount in the cake and the desired dry matter content of the discharged slurry upon cake removal which may preferably result in a internal diameter in range of 8-15 mm

In order to increase the filtering capacity, it is often preferred to use a plurality of tubular elements 21 and arrange them in parallel having a common inlet for receiving wastewater to be treated.

During filtration, it is preferred to provide pressure difference across the pre-filtering device 1 between 20 and 500 mbar.

As indicated in particular with reference to the fig. 4, the connections between the various elements of the wastewater treatment may desirably be disconnectable or closable. Thus, the fluidic connectable connections may advantageously comprise valves for controlling the flow through such connections, e.g. a valve in the outlet 9 or outlet 16.

The screening device arranged upstream of the pre-filtering device 1 as illustrated in fig.s 3 and 5, is preferably adapted to carry out a filtering-out of objects above a pre-selected size, such above 2 mm, preferably above 5 mm, such as above 10mm, from the wastewater prior to be fed into the pre-filtering device 1. The screening device may be embodied as a mechanical filter including a mesh having openings allowing the desired filtering. It is also possible to have the traditional primary sedimentation tank between the screening device and the pre-filtering device 1 (not shown in figures).

Providing of a filtration cake 10 of a pre-filtering device 1, in a system as disclosed above, for filtering wastewater through the filtration cake 10, may typically include the steps of
- feeding sludge formed in the biological treatment device 2 towards an upstream surface of a support structure 20
- accumulating material in an accumulation phase (A) comprising accumulating activated sludge flocs and/or coagulated substances on the support structure 20 by inducing a pressure difference to generate a flow of sludge, towards and through the support structure 20 until a layer of flocs has been established on the support structure 20,
- compressing the accumulated material in a compression phase (B) comprising increasing the pressure difference to a level being sufficient to compress the layer of accumulated flocs on the support structure 20 into a filtration cake.

And, as illustrated, the filtration cake being provided from activated sludge flocs and/or coagulated substances formed in the downstream biological treatment device 2.

Preferably, the pressure difference during the accumulation phase (A) is below 1 bar, such as below 0.5 bar, or even lower than 0.1 bar, and the pressure difference during the compression phase (B) is above the pressure difference of the accumulation phase (A) and below 1 bar, such as below 0.5 bar, or even below 0.3 bar. The pressure difference during the accumulation phase (A) is preferably increased over time to keep filtrate flow constant.

In some preferred embodiments, the pressure difference during the accumulation phase (A) and/or the compression phase (B) is/are provided by a hydrostatic pressure difference, e.g. provided by arranging an outlet of the pre-filtering device 1 at lower level than an upper surface of the sludge, by pressurising the sludge, and/or providing a suction at the outlet. Operation with hydrostatic pressure difference is also possible and preferred during the filtration phase (C).

After having been in an operation mode (C) for a period, the filtration cake 10 is renewed by removing the filtration cake, and the accumulation phase (A) and compression phase (B) are carried out again. Preferably, phase (C) is gravity driven and phase (A) and (B) or driven by pumps.

The system disclosed above may be used in the following manner during filtration of wastewater. Initially, a filtration cake 10 is provided. Once the filtration cake 10 is provided, filtering the wastewater through the filtration cake 10 may be commenced and the filtered wastewater is subjected to biological treatment in the biological treatment device. When the filtration cake is fouled by organics and/or nutrient to an extent where e.g. the pressure difference across the filtration cake 10 reaches a level no longer being feasible, the filtration cake 10 is removed.

It is noted that the biological processing in biological treatment device 2 although not receiving any filtrate during the cake renewal process continues to treat the material contained in the treatment device 2. Further, and depending on how the filtration cake renewal process is carried out, a flow of liquid may be present from the pre-filtering device 1 and to the biological treatment device 2.

In embodiments including a digester, the removed filtration cake 10 is fed to a digester 8. In addition, the method may further comprise separating from the content in the digester 8:
- reject water 13 and feeding is to the biological treatment device 2,
- waste sludge 11,
- biogas 12.

In the embodiment including a separator, the wastewater treatment may further comprise separating the sludge formed in the biological treatment device 2, by use of the separator 3, into at least two fractions, an effluent 6 and a discharge 7 (the effluent has a lower content of solids than the discharge). The discharge 7 of the separator 3 is typically fed into the biological treatment device 2 during filtration or into the pre-filtering device 1 for providing of a filtration cake 10.

The wastewater treatment method may also comprise the step of dividing the wastewater into two streams (when screening is applied, the division takes typically place downstream of the screening) and feeding one stream to the pre-filtering device 1 and feeding the other stream into the biological treatment device 2.

Reference is made to fig. 7A which shows a tubular element 21 in a cross sectional view during filtration. The wastewater enters into the interior of the tubular element, and as a filtration cake 10 is present on the inside of the tubular element a filtration takes places whereby a filtrate is provided out of the finer opening of the outer layer 23 of the tubular element 21.

Fig. 7B shows schematically a process of removing a filtration cake 10. The process involves introducing air bubbles into the interior (an internal void 28- see fig. 6 and 7B) of the tubular element 21 from below. Such air bubbles will rise upwardly in the tubular element and create an up-going fluid motion inside the tubular element. The upwardly going motion of both the air bubbles and the fluid will tear off the filtration cake 10 and the tearing off is, typically, increased by the pockets 29 present in the inner layer 22 which generates turbulence assisting in the tearing off. During this, the upper end of the tubular element 21 is closed so that air bubbles are collected as slug of gas 24 (an air pocket) at the upper end. The slug of gas 24 grows bigger downwardly which pushes the filtration cake material out through the bottom of the tubular element. In this way, an "air piston" is realized. This process has inter alia the advantage that the filtration cake is removed in a way where the high dry matter content is preserved.

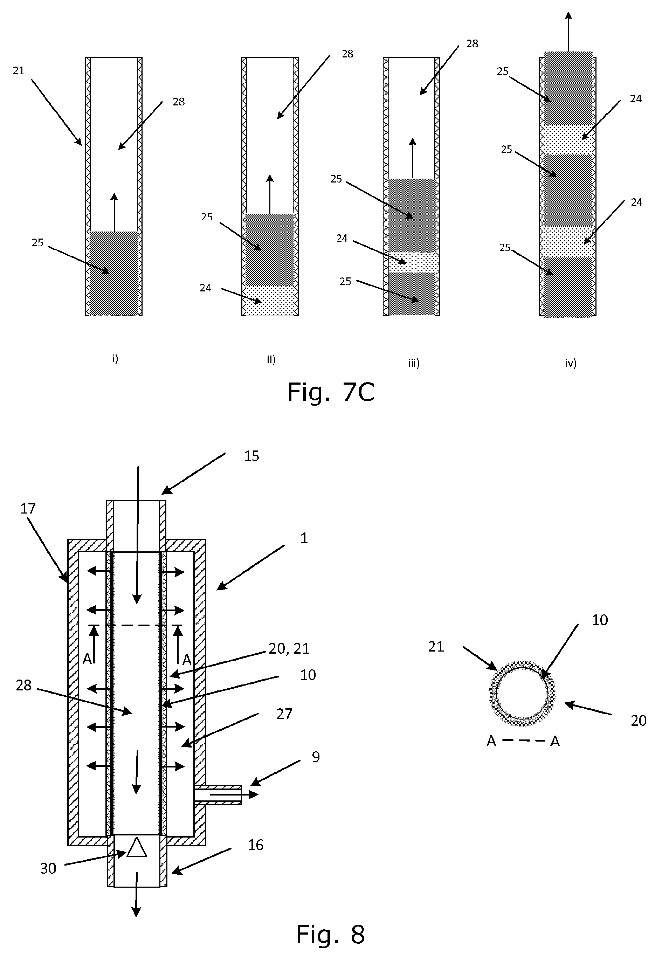

While the process shown in fig. 7B effectively removes filtration cake 10, filtration cake material may still be present inside the finer structures of the support structure 21. Such remaining material may be referred to as a fouling in the support structure. In order to remove such fouling, the process shown in fig. 7C may be applied. The process of fig. 7C comprises establishing a flow of alternating portions of sludge 25 and slugs of gas 24 as depicted in fig 7C - in fig. 7C the different figures labelled i)-iv) depicts the initial phases in establishing the alternating portions and slugs. As depicted, the flow (which can be termed crossflow) goes upwardly and the turbulence created by sludge and air can penetrate into the support structure to release the fouling. Further, as the structure of the inner layer 22 is relatively coarse (compared to the structure of the outer layer 23) the flow of sludge and air will become more turbulent which will enhance the removal of the fouling. Finally, as the end result of the process in fig. 7C is a tubular structure filled with sludge and air, the cake may easily be built from the material present in the tubular structure 21. When the air flow is stopped and sludge flow maintained, the tubular structure quickly gets primed with sludge and cake build-up can be started anew.

In some situations it may be preferred to provide a further dewatering of the sludge in order to obtain a thicker sludge (higher dry matter content) than what is obtained by the method and system disclosed above. If this is preferred, then dewatering devices, such as a sedimentation device, a fine screening device, a belt filtration device, a centrifuge or the like may be applied for instance to increase the dry matter content in the discharge 7 from the separation device 3, used as the separation device 3 and/or used to treat the effluent 6. It is often preferred that the sludge prior to e.g. digestion has a dry matter content between 3-5%. However, it is noted that by use of the cake filtration disclosed herein, the thickening of the sludge may be provided by the cake filtration.

Reference is made to fig. 8 which is a schematical cross sectional view of a pre-filtering device 1 according to a preferred embodiment of the present invention. The pre-filtering device 1 comprises a support structure 20 in the form of a tubular element 21 as disclosed in fig. 6.

The pre-filtering device 1 of fig. 8 is a cake filtration device having a fluid penetrable support structure 20, the support structure 20 being provided as one or more tubular elements 21. In fig. 8 only a single tubular element 21 is shown. The support structure has a filtration cake 10 provided on the inside of the fluid penetrable support 20 and the pre-filter device 1 having an inlet 15 being connectable to receive cake building material and liquid to be filtered so that the flux direction of liquid to be filtered is from the inside of the support structure 20, through the filtration cake 10 and to the outside of the support structure 20. Thus, the liquid after having passed through the fluid penetrable support 20 and the filtration cake 10 is termed a filtrate.

As also shown in fig. 8, the pre-filtering device 1 has an outlet 16 for outletting liquid from the interior of the tubular element 21 (termed residue) and up-concentrated solids, and a filtrate outlet 9 for outletting filtrate from the filtering device 1.

As disclosed herein, the filtration cake 10 is provided by deposition of solids from the sludge formed in a biological treatment device 2, or by solids from the sludge in combination with solids from a digester.

In preferred embodiments and as illustrated schematically in fig. 8, the pre-filtering device 1 further comprises a fluid tight casing 17 encapsulating the support structure 20 and thereby providing a cavity 27 outside the support structure 20 in fluid communication with the filtrate outlet 9.. This cavity 27 is separated from the outlet 16 by the support structure 20. The interior of the support structure 20 is typically in fluid communication with the inlet 15 for receiving the liquid to be filtered and outlet 16 to make it possible to establish fluid circulation within the support structure 20.

The injection of gas, for removing the filtration cake 10, may preferably be done by the use a nozzle 30 arranged to introduce gas, such as air, into the interior of the tubular element as disclosed above. In fig. 8, the nozzle 30 arranged to introduced gas, such as air, into the interior of the 28 of the tubular element 21 is arranged at a lower end of the tubular element 23.

The actual position of the nozzle 30 may vary, although it is preferred to arrange it at the lower end of the tubular element 21 (the tubular element 21 is in such situation arranged with it longitudinal axis parallel to the gravity) such that gas (e.g. air) may flow into the tubular element 21 and form a slug of gas 24, such as a slug of air, which gradually fills the void 28 of the tubular element 21 when the upper end thereof is blocked so that the gradually filling acts as a piston pushing material of the filtration cake out (as disclosed above).

Further, the nozzle 30 may be a conventional nozzle - or a number of nozzles - which is suitable for introducing gas in the desired manner, which preferably is to introduce gas in manner where gas bubbles are formed at the nozzle 30 and which gas bubbles rises upwardly in the tubular element 21.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### LIST OF REFERENCES USED

- 1: pre-filtering device
- 2: biological treatment device
- 3: separator
- 6: effluent
- 7: discharge
- 8: digester
- 9: outlet (filtrate) from pre-filtering device
- 10: filtration cake
- 11: waste sludge
- 12: biogas
- 13: reject water
- 14: fluid dividing device
- 15: inlet to pre-filtering device
- 16: residue outlet from pre-filtering device
- 17: casing
- 20: (fluid penetrable) support structure
- 21: tubular element
- 22: an inner layer
- 23: an outer layer
- 24: slug of gas (air)
- 25: portion of sludge
- 27: cavity in filtering device
- 28: internal void in tubular element
- 29: Pocket
- 30: Nozzle

## Claims

1. A water treatment system comprising
• a pre-filtering device (1) receiving water to be treated and providing a filtrate,
• a biological treatment device (2) being fluidic connectable to or in fluidic connection with the pre-filtering device (1) for receiving the filtrate from the pre-filtering device (1), the biological treatment device (2) being adapted to perform a biological treatment of the filtrate,
**characterized in that**
• the pre-filtering device (1) is a cake filtration device arranged upstream of the biological treatment device (2) and comprising
o a filtration cake (10), the filtration cake being provided by deposition of solids from the sludge formed in the biological treatment device (2),
so that the filtrate is provided by filtering water through filtration cake (10).

2. A water treatment system according to claim 1, wherein the filtration cake (10) is provided on a fluid penetrable support structure (20) of the pre-filtering device (1), the filtration cake (10) being provided on an upstream surface of the pre-filtering device (1) relatively to the flux direction of water through the filtration cake.

3. A water treatment system according to claim 1 or 2, **characterized by** the pre-filtering device (1) being fluidic connectable to receive biological activated sludge, preferably activated sludge flocs, so as to deposit material of the biologically treated water on the upstream surface of the pre-filtering device (1), to provide a filtration cake made from sludge solids formed in the biological treatment device and which filtration cake is used for filtering non-biologically treated water in the pre-filtering device.

4. A water treatment system according to any of the preceding clams, **characterized by** the system further comprising a digester (8) for converting organic material of the water into biogas.

5. A water treatment system according to claim 4, **characterized by** the digester (8) being fluidic connectable with or in fluidic connection with the pre-filtering device (1) for the receiving filtration cake (10) containing material filtered out from the water.

6. A water treatment system according to claim 4 or 5, **characterized by** the digester comprising a confined space having an outlet for gas (12) produced, an outlet for waste sludge (11) and an outlet for rejected water (13).

7. A water treatment system according to clam 6, **characterized by** the outlet for rejected water (13) from the digester is fluidic connectable to or in fluidic connection with the biological treatment device (2) for feeding rejected water from the digester (8) to the biological treatment device (2).

8. A water treatment system according to any of the preceding claims, **characterized by** the system further comprising a fluid dividing device (14), the fluid dividing device (14) being adapted to divide the water into two streams at a volume ratio of one of the following: 10% to pre-filtering device (1) and 90 % to the biological treatment device (2), or 20% to pre-filtering device (1) and 80 % to biological treatment device (2), or preferably 30 % to the pre-filtering device (1) and 70 % to biological treatment device (2), or preferably, the water is divided so that the volume fraction flowing to the pre-filtering device (1) is typically 5 to 40%.

9. A water treatment according to any of the preceding claims, **characterized by** the support structure (20) is provided as one or more tubular element (21) having a fluid penetrable surface.

10. A water treatment system according to claim 9, **characterized by** the interior of the one or more of the tubular elements (21) forms the upstream surface of the pre-filtering device (1) on which the filtration cake (10) is provided, and the interior of the one or more of the tubular elements (21) is fluidic connectable to or in fluid connection with an inlet receiving water to be treated.

11. A water treatment system according to any of the preceding claims, **characterized by** the system further comprising a separator (3) being fluidic connectable to or fluidic connected to the biological treatment device (2) so as to receive sludge, preferably being sludge mixed liquor, from the biological treatment device (2) and separating the sludge into at least two fractions, an effluent (6) and a discharge (7) wherein the effluent has a lower content of solids than the discharge.

12. A water treatment system according to claim 11, **characterized by** the separator (3) is a sedimentation device (3) in which the discharge (7) is sludge with solids, preferably being activated sludge, and the effluent (6) is activated sludge supernatant, and wherw the separator (3) being fluidic connectable to or in fluidic connection with the biological treatment device (2) for feeding the discharge to the biological treatment device (2).

13. A water treatment system according to claim 11 or 12, **characterized by** the pre-filtering device (1) being fluidic connectable to or in fluidic connection with the separator (3) so as to feed the discharge (7) towards the upstream surface of the pre-filtering device (1).

14. A water treatment system according to any of the preceding claims 11-13, **characterized by** the system comprising a further filter element arranged to filter effluent from the separator (3), the filter element having a filtration cake provided on a fluid penetrable support surface of the filter element, the filtration cake being provided on an upstream surface of the filter element relatively to the flux direction of effluent through the filtration cake, the filtration cake being provided by deposition of solids from the sludge formed in the biological treatment device (2).

15. A water treatment system according to any of the preceding claims, **characterized in that** the system comprises a screening device arranged upstream of the pre-filtering device (1), said screening device being adapted to carry out a filtering-out of objects above a pre-selected size, such as above 2 mm, preferably above 5 mm, such as above 10mm, from the water prior to be fed into the pre-filtering device (1).

16. A method of treating water, such as waste water, **characterized by** utilizing a filtration system according to any of the preceding claims 1-15, and comprising the steps of:
• providing a filtration cake (10,
• filtering the water through the filtration cake (10),
• subjecting the filtered water to biological treatment in the biological treatment device (2)
• removing the filtration cake (10)
• feeding the removed filtration cake to a digester (8)

17. A method according to claim 16, **characterized by** separating from the content in the digester
- reject water (13) and feeding is to the biological treatment device (2),
- waste sludge (11),
- biogas (12).

18. A method according to claim 16 or 17, **characterized by** further comprising separating the sludge formed in the biological treatment device (2), by use of the separator (3), into at least two fractions, an effluent (6) and a discharge (7) wherein the effluent has a lower content of solids than the dischargeand feeding the discharge (7) of the separator (3) into the biological treatment device (2) during filtration or into the pre-filtering device (1) for providing of a filtration cake (10).

19. A method according to any of the preceding claims 16-18, **characterized by** further comprising dividing the water into two streams and feeding one stream to the pre-filtering device (1) and feeding the other stream into the biological treatment device (2).

20. A method for providing a filtration cake (10) of a pre-filtering device (1), for filtering water through the filtration cake (10), wherein the filtration cake is provided by:
• feeding sludge formed in a biological treatment device (2) towards a surface of a support structure (20)
• an accumulation phase (A) comprising accumulating activated sludge flocs and/or coagulated substances on the support structure (20) by inducing a pressure difference to generate a flow of sludge, towards and through the support structure (20) until a layer of flocs has been established on the support structure (20),
• a compression phase (B) comprising increasing the pressure difference to a level being sufficient to compress the layer of accumulated flocs on the support structure (20) into a filtration cake,
**characterized by**,
• the filtration cake being provided from activated sludge flocs and/or coagulated substances formed in the a downstream biological treatment device (2) which receives the pre-filtered water from the pre-filtering device (1).
